Europäisches Patentamt

European Patent Office

Office européen des brevets

(11) Publication number: **0 184 806**
**A2**

## (12) EUROPEAN PATENT APPLICATION

(21) Application number: **85115649.7**

(22) Date of filing: **09.12.85**

(51) Int. Cl.⁴: **G 06 F 9/44**

(30) Priority: **10.12.84 JP 260376/84**

(43) Date of publication of application: **18.06.86**
**Bulletin 86/25**

(84) Designated Contracting States: **DE FR GB IT NL**

(71) Applicant: **NEC CORPORATION, 33-1, Shiba 5-chome,**
**Minato-ku, Tokyo 108 (JP)**

(72) Inventor: **Nohmi, Hitoshi c/o NEC Corporation, 33-1,**
**Shiba 5-chome Minato-ku, Tokyo (JP)**
Inventor: **Nakada, Katsutoshi c/o NEC Corporation, 33-1,**
**Shiba 5-chome Minato-ku, Tokyo (JP)**

(74) Representative: **Vossius Vossius Tauchner Heunemann**
**Rauh, Siebertstrasse 4 P.O. Box 86 07 67,**
**D-8000 München 86 (DE)**

(54) Variable wordlength computing module for dataflow processors.

(57) A computing module for a dataflow processor converts a variable wordlength code into a series of first and second half-wordlength codes of higher and lower significant bits and appends an identifying indicator or label to each half-wordlength code. A half-to-full word converter sequentially receives the half-wordlength codes and combines them into a full-wordlength code in response to the receipt of the indicator appending to the second half-wordlength code. A queuing circuit detects a full-wordlength code of later arrival from the half-to-full word converter means which forms with a full-wordlength code of early arrival from the converter a data set necessary to effect computations and simultaneously sending the full-wordlength codes of early and later arrivals to a computing logic, which effects the computations on the full-wordlength codes and produces a full-wordlength code indicating the result of the computations. A full-to-half word converter divides the full-wordlength code obtained by the computing logic into half-wordlength codes and appending an identifying indicator to each of the divided half-wordlength codes.

VOSSIUS · VOSSIUS · TAUCHNER
HEUNEMANN · RAUH
PATENTANWÄLTE
SIEBERTSTR. 4, 8000 MÜNCHEN 80
TEL. (089) 47 40 75

0 184 806

Our Ref: U 221 EP
Case: NE-63-EP
NEC Corporation
Tokyo, Japan

December 9, 1985

"Variable Wordlength Computing Module

for Dataflow Processors"


The present invention relates to computing modules for link-coupled dataflow processors.

In conventional dataflow processors, a plurality of computing modules are connected in a loop of common bus through which input and output data items are passed on from one module to another to effect necessary computations. Each data item comprises a select flag identifying a prescribed computing module and a variable identifying a data word contained in the data item. Each computing module includes a bus interface which decodes the select flag to determine whether the data item is to be passed on to the next computing module or whether it is destined for the own computing module. A queuing circuit is connected to the interface to receive the data word and its appending variable and stores the received data word until it receives a variable appending to a subsequent data word to be computed with the stored data word. These data words are applied in pair to a computing logic where computatins are performed on the paired data words to obtain a result of computations, which is sent back to the interface for delivery to the common bus with a select flag and a variable appended to it.

However, the size and complexity of the computing module and hence the dataflow processor as a whole are determined by the maximum wordlength of the data to be handled by the system. Therefore, even if only one unit of the system requires the maximum wordlength, the other units must be capable of handling the same amount of data bits.

## SUMMARY OF THE INVENTION

It is therefore an object of the present invention to provide a computing module for a dataflow processor which is capable of handling maximum wordlength data without adding to the system complexity.

This object is obtained by converting input data into a pair of codes of higher and lower significant bits, each having one-half the maximum wordlength of the system so that maximum wordlength data is divided into information bearing higher and lower significant bits of half-wordlength each and minimum wordlength data, which is one half the maximum wordlength, is converted to information bearing higher significant bits and all-zero containing lower significant bits of half-wordlength each.

According to a broader aspect, the present invention provides a computing module for a dataflow processor in which a variable wordlength code is converted into a series of first and second half-wordlength codes of higher and lower significant bits, respectively, and each half-wordlength code is appended by an identifying indicator. The module comprises a half-to-full word converter for sequentially receiving the half-wordlength codes and the indicators appending to them and combining the first and second half-wordlength codes into a full-wordlength code in response to the receipt of the indicator appending to the second half-wordlength code. A queuing circuit detects a full-wordlength code of later arrival from the half-to-full word converter which forms with a full-wordlength code of early arrival from the converter a data set necessary to effect computations and simultaneously sending the full-wordlength codes of early and later arrivals onto separate buses respectively. A computing logic effects the computations on the full-wordlength codes sent on the separate buses and produces a full-wordlength code indicating the result of the computations. A full-to-half word converter is included for dividing the full-wordlength code obtained by the computing logic into half-wordlength codes and appending an identifying indicator to each of the divided codes.

According to a specific aspect, the present invention provides an apparatus which comprises means connected in a common bus of a dataflow processor to receive a variable wordlength code for converting it into a series of first and second half-wordlength codes of higher and lower significant bits, respectively, and appending first and second indicators to each of the half-wordlength codes, the first indicator identifying a prescribed computing module and the second indicator identifying the half-wordlength code to which it appends. Each of the computing modules of the processor comprises an interface connected in the common bus for sequentially passing the first and second half-wordlength codes together with the appending first and second indicators to another computing module or sequentially passing the first and second half-wordlength codes together with the second indicators appending to the half-wordlength codes to the own computing module depending on the first indicator. A half-to-full word converter is provided for sequentially receiving the half-wordlength codes and the second indicators appending to them from the interface and combining the first and second half-wordlength codes into a full-wordlength code in response to the receipt of the second indicator appending to the second half-wordlength code. A queuing circuit detects a full-wordlength code of later arrival from the half-to-full word converter which forms with a full-wordlength code of early arrival from the converter a data set necessary to effect computations and simultaneously sending the full-wordlength codes of early and later arrivals onto separate buses respectively. A computing logic effects the computations on the full-wordlength codes sent on the separate buses and produces a full-wordlength code indicating the result of the computations. A full-to-half word converter is provided for dividing the full-wordlength code obtained by the computing logic into half-wordlength codes and sequentially sending the divided codes to the interface and appending third and fourth indicators to each of the divided codes, the third and fourth indicators respectively identifying a prescribed computing module and each of the divided half-wordlength codes. The interface includes a multiplexer that sequentially receives the half-wordlength codes and the appending indicators from the full-to-half word converter to multiplex them with the half-wordlength codes and indicators which are to be passed on to another computing module.

BRIEF DESCRIPTION OF THE DRAWINGS

The present invention will be described in further detail with reference to the accompanying drawings, in which:

Fig. 1 is an illustration of the general structure of a dataflow processor embodying the present invention;

Fig. 2 is an illustration of the data format according to the invention;

Fig. 3 is an illustration of details of the reader/writer of Fig. 1; and

Fig. 4 is a block diagram of a computing module of Fig. 1.

## DETAILED DESCRIPTION

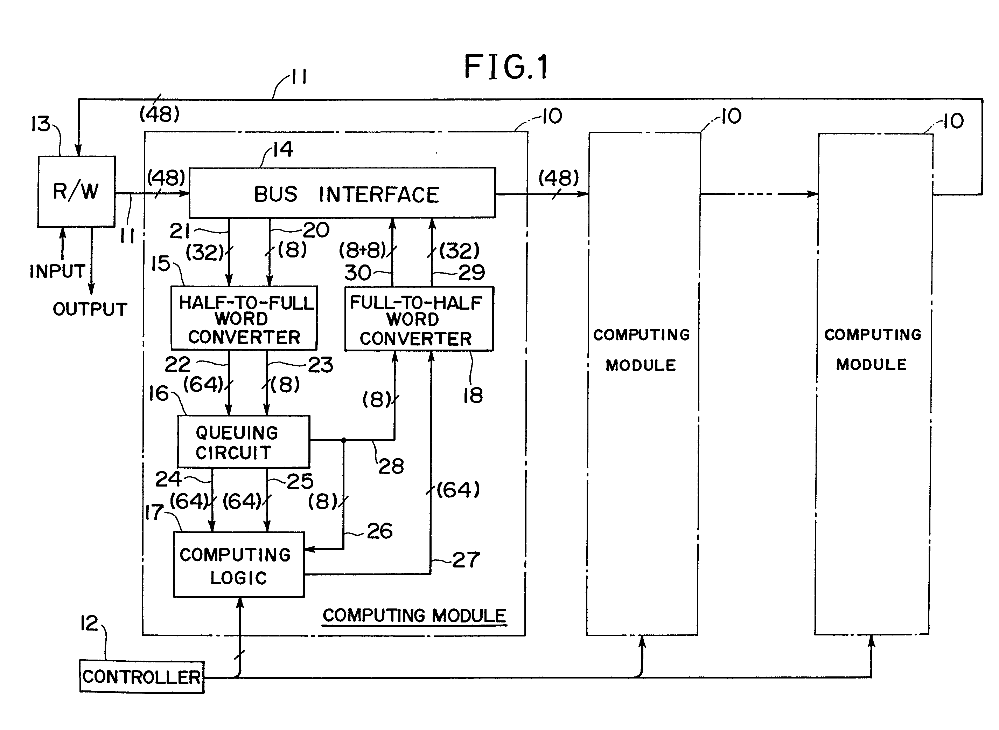

Referring now to Fig. 1, a dataflow proccessor embodying the invention comprises a plurality of computing modules 10 connected successively in a common 48-line bus 11 which forms a loop. Each computing module 10 is under control of a controller 12 to effect intended computations. Input data is applied to an input-output circuit 13, known as "reader/writer" through which the data is applied to a specified computing module 10 and through which output data is withdrawn to an external circuit.

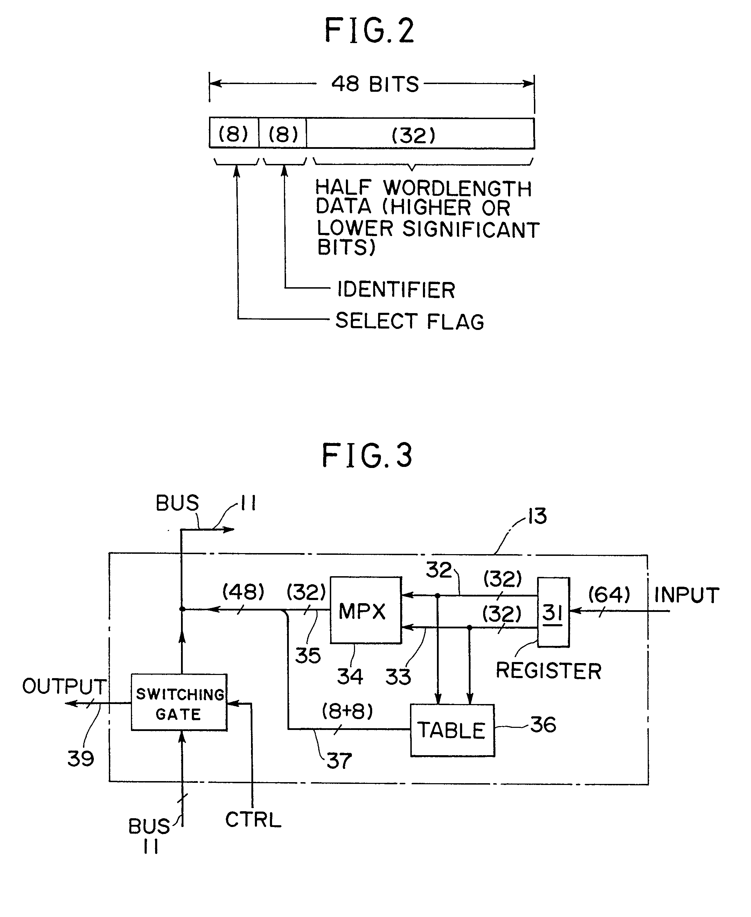

The input data to the reader/writer 13 is of a variable length, either 64-bit full-wordlength or 32-bit half-wordlength. If the input data is of a full-wordlength, reader/writer 13 divides it into higher and lower significant bits of half wordlength each and generates an 8-bit select flag identifying a computing module in which the data is to be processed and a variable identifying each half-word data to form a data item as shown in Fig. 2. The data items are sequentially sent on bus 11 to a computing module 10. If the input data is of a half-wordlength, it is sent as higher significant bits followed by a half-word of 32 lower significant "0" bits.

Each computing module comprises a bus interface 14, a half-to-full word converter 15, a queuing circuit 16, a computing logic 17 and a full-to-half word converter 18. Bus interface 14 detects if the select flag appended to the input data specifies the own computing module and, if so, it sends the variable appended to it on an 8-line bus 20 and the received 32-bit word on a 32-line bus 21 to the half-to-full word converter 15. If the select flag specifies another computing module, the data item is passed to the next computing module.

Half-to-full word converter 15 includes a memory in which the 32-bit data is stored. Converter 15 decodes the variable sent on bus 23 to detect when a subsequently arrived half-word data forms a full-word with the previous data stored in the memory. When this occurs, the higher and lower bit half-words are combined together and sent on a 64-line bus 22 together with a variable indicating the 64-bit full-word data on an 8-line bus 23 to the queuing circuit. If the input data is of a half-wordlength, the converter 15 combines it with the following half-word of "0"s to form a 64-bit full word.

Queuing circuit 16 includes a memory in which the full word data is stored until it receives a companion data word which forms a pair necessary to effect computations. The companion data words in pair are respectively sent on 64-line buses 24 and 25 to the computing logic 17 together with a variable indicating the pair sent on an 8-bit bus 26.

Computing logic 17 performs computations as specified by the controller 12 and supplies the results of the computations on a 64-line bus 27 to the full-to-half word converter 18. Converter 18 divides the 64-bit computed data into half words of higher and lower significant bits and sends them sequentially on a 32-line bus 29 to the bus interface 14. At the same time, the converter 18 receives the variable that identifies the computation data pair from queuing circuit 16 on a bus 28 to generate a variable identifying each of the divided half-word data, regenerates the select flag identifying the own computing module, and sends them on a 16-line bus 30 to the interface 14.

Each of the half-wordlength data is sent on common bus 11 and passed on through the interfaces 14 of the subsequent computing modules 10 to the reader/writer 13 to be the output of the dataflow processor.

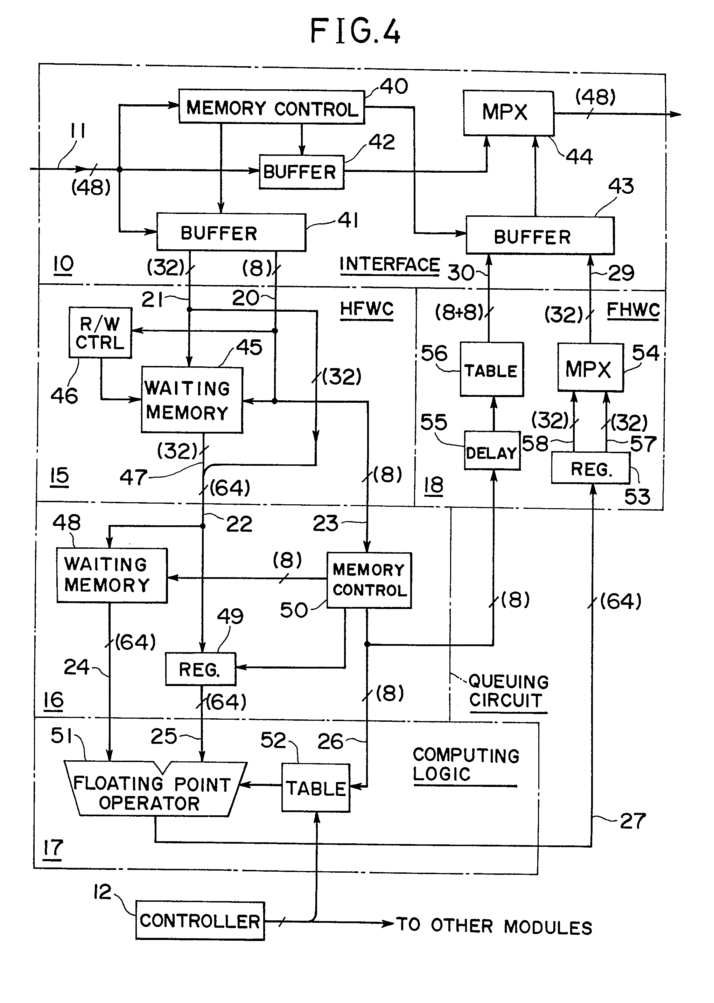

Details of the reader/writer 13 and each computing module 10 are respectively shown in Figs. 3 and 4.

In Fig. 3, the input data is applied to a 64-bit shift register 31. If the data has a 64-bit wordlength (double precision data), it is divided into half-words of higher and lower significant bits and respectively sent on 32-line buses 32 and 33 to a multiplexer 34. If the data is a 32-bit length word, it is stored in the higher bit positions of the shift register 31 and sent on bus 32 to the multiplexer 34 which receives a half-word of all zero bits on bus 33. Multiplexer 34 sequentially supplies the higher- and lower-bit half-word data to a 32-line bus 35. Simultaneously, the outputs of shift register 31 are applied to a table memory 36 which stores select flags and variables in locations addressable as a function of the data from shift register 31. A select flag and a variable are retrieved from the table memory 36 to be appended to each half-length word and sent on a 16-line bus 37 together with the data on bus 35 to the 48-line common bus 11. Reader/writer 13 includes a switching gate 38 which is responsive to a control signal from the controller 12 for switching the computed data to the output bus 39.

Referring to Fig. 4, the bus interface comprises a memory controller 40, first-in-first-out (FIFO) buffer memories 41, 42 and 43 and a multiplexer 44. The data item from reader/writer 13 is applied to buffer memories 41 and 42 and simultaneously stored therein, and also to the memory controller 40. Memory controller 40 decodes the select flag contained in the input data. If it specifies a computing module other than the own module, controller 40 enables the buffer 42 to pass the stored data item to the multiplexer 44 and thence to the common bus 11 multiplexed with the output of buffer 43. If the select flag specifies the own computing module, buffer 41 is enabled to pass the half-word data onto bus 21 and the variable identifying it onto bus 20.

Half-to-full word converter 15 comprises a waiting memory 45 having a capacity of typically 256 x 32 bits and a read/write controller 46 which also includes a memory of 256 bits for storing read/write control bits and controls the read/write modes of the memory 45 in response to the variable sent from buffer 41. Waiting memory 45 is in a write mode when the variable identifying the higher-bit half-word data is received from buffer 41 and stores it in a location addressable as a function of the variable identifying it. Memory 45 is switched to a read mode in response to the variable identifying the lower-bit half-word data being received by read-write controller 46 and reads the stored higher-bit half-word data as a function of the last-mentioned variable. Memory 45 sends it onto an 32-line output bus 47, which is combined with the 32-line data input bus 21 to form a full-word on the 64-line bus 22.

Thus, the full-word input data is recovered and the half-word input data is converted to a full-length word for double precision.

Queuing circuit 16 includes a waiting memory 48, a 64-bit register 49 and a memory controller 50. The full-word data on bus 22 is input to the waiting memory 48 and to the register 49, and the variable identifying the full-word data is sent from buffer 41 on buses 20 and 23 to the memory controller 50. Memory controller 50 decodes the incoming variable in search of a subsequent companion data word neccessary to perform computations on the data stored in memory 48. When the desired variable is detected, controller 50, the companion data word has been stored in register 49, and proceeds to read the stored data out of the memory 48 onto bus 24 and sends a signal to the register 49 to transfer its contents onto bus 25.

Computing logic 17 includes a floating point operator unit 51 which receives the companion data words on buses 24 and 25 to perform computations in accordance with the output of a table memory 52 which is in receipt of a variable sent on bus 26 from memory controller 50 indicating the pair of data words and an address from the controller 12.

The result of the computations is sent on 64-line output bus 27 to the full-to-half word converter 18, which comprises a 64-bit shift register 53, a multiplexer 54, a delay 55 and a table memory 56. The output of floating point operator unit 51 is stored in the register 53 where it is divided into half-words of higher and lower bits and sent on 32-line buses 57 and 58 respectively to multiplexer 54. Multiplexer 54 sequentially sends the higher and lower bit half-words on bus 29 to buffer 43. Delay 55 is to introduce a delay time to the variable indicating the computed data so that it is time-coincident with it. Table memory 56 stores select flags and variables in locations addressable as a function of the variable sent from memory control 50. An 8-bit select flag and an 8-bit variable are read out of the memory 56 in response to the delayed variable applied thereto to be sent on bus 30 simultaneously with each half-word data output from multiplexer 54.

Buffer memory 43 combines the half-word data with the select flag and variable to from an output data item in the same format as shown in Fig. 2 and sends it to multiplexer 44 to be multiplexed with the data delivered from buffer 42.

The present invention provides an advantage in that if need arises to increase the maximum wordlength of an existing dataflow processor, it is only required to add a computing module of the invention to it, eliminating the need for altering the internal structure of the existing system. In addition, the computing module of the invention allows a compact design for dataflow processors. This is advantageous for use in aircraft where the processor is required to operate at high speeds and its weight and size are an important factor.

- 13 -

0 184 806

Claims

1.    A computing module for a dataflow processor in which a variable wordlength code is converted into a series of first and second half-wordlength codes of higher and lower significant bits, respectively, and each half-wordlength code is appended by an identifying indicator, comprising:

half-to-full word converter means for sequentially receiving said half-wordlength codes and said indicators appending to them and combining said first and second half-wordlength codes into a full-wordlength code in response to the receipt of the indicator appending to the second half-wordlength code;

queuing means for detecting a full-wordlength code of later arrival from said half-to-full word converter means which forms with a full-wordlength code of early arrival from said converter means a data set necessary to effect computations and simultaneously sending said full-wordlength codes of early and later arrivals onto separate buses respectively;

computing logic means for effecting the computations on said full-wordlength codes sent on said separate buses and producing a full-wordlength code indicating the result of the computations; and

full-to-half word converter means for dividing the full-wordlength code obtained by said computing logic means into half-wordlength codes and appending an identifying indicator to each of said divided codes.

2.    Apparatus as claimed in claim 1, wherein said half-to-full word converter means comprises:

memory means for storing said first half-wordlength code in a location addressable as a function of the indicator appending to said second half-wordlength code and simultaneously sending the stored code and said second half-wordlength code on separate buses respectively in response to the arrival of the last-mentioned indicator.

3.    Apparatus as claimed in claim 1, wherein said full-to-half word converter means comprises:

register means for storing said full-wordlength code from said computing logic means in higher and lower significant bit positions;

multiplexer means for multiplexing the half-wordlength codes stored in said higher and lower significant bit positions of the register means; and

memory means storing a plurality of indicators in locations addressable as a function of an indicator identifying the full-wordlength code from said computing logic means and reading a said stored indicator from the location in response to said indicator identifying the full-wordlength code obtained by said computing logic means, and appending said indicator read from the memory means to each of said multiplexed half-wordlength codes.

4. Apparatus for a dataflow processor having a plurality of computing modules connected in a common bus, comprising:

means connected in said common bus to receive a variable wordlength code for converting it into a series of first and second half-wordlength codes of higher and lower significant bits, respectively, and appending first and second indicators to each of said half-wordlength codes, said first indicator identifying a prescribed computing module and said second indicator identifying the half-wordlength code to which it appends;

each of said computing modules comprising:

an interface connected in said common bus for sequentially passing said first and second half-wordlength codes together with the appending first and second indicators to another computing module or sequentially passing said first and second half-wordlength codes together with the appending second indicators to the own computing module depending on said first indicator;

half-to-full word converter means for sequentially receiving said half-wordlength codes and said second indicators appending to them from said interface and combining said first and second half-wordlength codes into a full-wordlength code in response to the receipt of the second indicator appending to the second half-wordlength code;

queuing means for detecting a full-wordlength code of later arrival from said half-to-full word converter means which forms with a full-wordlength code of early arrival from said converter means a data set necessary to effect computations and simultaneously sending said full-wordlength codes of early and later arrivals onto separate buses respectively;

computing logic means for effecting the computations on said full-wordlength codes sent on said separate buses and producing a full-wordlength code indicating the result of the computations; and

full-to-half word converter means for dividing the full-wordlength code obtained by said computing logic means into half-wordlength codes and sequentially sending the divided codes to said interface and appending third and fourth indicators to each of said divided codes, said third and fourth indicators respectively identifying a prescribed computing module and each of said divided half-wordlength codes,

said interface including means for multiplexing the half-wordlength codes and the indicators appendint thereto from said full-to-half word converter means with the half-wordlength codes and indicators appending thereto to be passed on to another computing module.

5.    Apparatus as claimed in claim 4, wherein said interface comprises:

       a first and a second buffer memory for simultaneously receiving and storing said first and second half-wordlength codes together with the appending first and second indicators; and

       memory control means for controlling said first and second buffer memories in accordance with the first indicator to send data stored in the first buffer memory to the interface of another computing module when it is specified by said first indicator and to send data stored in the second buffer memory to said half-to-full word converter means when the own computing module is specified by said first indicator.

6.    Apparatus as claimed in claim 4 or 5, wherein said half-to-full word converter means comprises:

       memory means for storing said first half-wordlength code from said interface in a location addressable as a function of said second indicator appending to said second half-wordlength code and simultaneously sending the stored code and said second half-wordlength code on separate buses respectively in response to the arrival of the last-mentioned second indicator from said interface.

7.    Apparatus as claimed in  any of claims 4 to 6, wherein said interface further comprises a buffer memory the output of which is connected to said multiplexer means of the interface, and wherein said full-to-half word converter means comprises:

register means for storing said full-wordlength code from said computing logic means in higher and lower significant bit positions;

multiplexer means for sequentially sending half-wordlength codes stored in said higher and lower significant bit positions of the register means to said buffer memory; and

memory means storing a plurality of said third and fourth indicators in locations addressable as a function of an indicator identifying the full-wordlength code from said computing logic means, reading said third and fourth indicators from the locations in response to said indicator identifying the full-wordlength code obtained by said computing logic means, and sending said third and fourth indicators to said buffer memory simultaneously with each of said half-wordlength codes supplied thereto.

# FIG.1

# FIG.2

48 BITS

| (8) | (8) | (32) |
|-----|-----|------|

HALF WORDLENGTH
DATA (HIGHER OR
LOWER SIGNIFICANT
BITS)

IDENTIFIER

SELECT FLAG

# FIG.3

BUS — 11

(48) (32)

MPX 34 33

32 (32)

(32)

31 (64) INPUT

35

REGISTER

OUTPUT

SWITCHING GATE

(8+8)

37

TABLE — 36

39

BUS 11

CTRL

# FIG.4